# EUROPÄISCHE PATENTSCHRIFT

(11) **EP 3 250 864 B1**
(45) Veröffentlichungstag und Bekanntmachung des Hinweises auf die Patenterteilung: **19.05.2021**
(21) Anmeldenummer: 16701907.4
(22) Anmeldetag: 25.01.2016
(51) Int. Cl.: F25D 23/06, H02G 3/22, H02G 15/013, H01B 17/30

(54) **VAKUUMDICHTE FOLIENDURCHFÜHRUNG**
VACUUM-TIGHT THROUGH-FILM BUSHING
TRAVERSÉE DE FILM AVEC ÉTANCHÉITÉ AU VIDE

(30) Priorität: 29.01.2015 DE 102015001063; 20.05.2015 DE 102015006558
(43) Veröffentlichungstag der Anmeldung: 06.12.2017
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: KERSTNER, Martin, 97072 Würzburg (DE); HIEMEYER, Jochen, 97753 Karlstadt (DE); FREITAG, Michael, 97082 Würzburg (DE)
(74) Vertreter: Herrmann, Uwe
(86) Internationale Anmeldenummer: PCT/EP2016/000122
(87) Internationale Veröffentlichungsnummer: WO 2016/120009

(56) Entgegenhaltungen:
- EP-A1- 1 378 716
- EP-A2- 1 462 745
- EP-A2- 2 354 733
- WO-A1-2014/121889
- DE-A1- 1 451 113
- DE-A1- 10 054 419
- DE-A1-102006 039 621
- JP-A- H08 312 880

## Beschreibung

Die vorliegende Erfindung betrifft eine Vorrichtung zum vakuumdichten Durchführen einer elektrischen Leitung durch eine Hochbarrierefolie sowie ein Verfahren zum Erstellen einer vakuumdichten Durchführung mit der erfindungsgemäßen Vorrichtung.

In Kühl- bzw. Gefriergeräten befinden sich oftmals Vakuumdämmkörper, um eine ausreichende Wärmedämmung des Geräts zu erreichen.

Um einen solchen Vakuumdämmkörper herzustellen, ist es erforderlich eine Hochbarrierefolie zu erzeugen, die ein Füllmaterial umgibt, das dem Vakuumdämmkörper die entsprechende Form und Stabilität verleiht und gleichzeitig verhindert, dass die Wandungen des Vakuumdämmkörpers in einem vakuumierten Zustand unmittelbar aneinander liegen. Die Verwendung der Hochbarrierefolie stellt eine kostengünstige Variante dar, um ein benötigtes Vakuumlevel in einer Vakuumdämmung über viele Jahre hinweg zu halten. Um für solche vakuumgedämmten Behältnisse eine hinreichende Lebensdauer bereitzustellen, muss der von der Hochbarrierefolie umgebene Bereich in hohem Maße vakuumdicht sein.

Oftmals ist es jedoch wünschenswert in dem von einer Hochbarrierefolie umgebenen Bereich, also einen vakuumierten Bereich, spezielle Sensoren oder andere elektrische Geräte zu platzieren.

Zur Kommunikation mit innenliegenden Sensoren ist es im Stand der Technik bekannt berührungslos mit Hilfe von RFID-Systemen durch die Hochbarrierefolie hindurch zu kommunizieren. Dabei ist es auch üblich im Vakuumsystem passive Systeme anzuordnen, die durch ein außen anliegendes System mit Strom versorgt werden. Dieser Vorgang ist aber mit hohen Verlusten behaftet und zudem nicht zur Übermittlung größerer Leistungen geeignet.

Nach einer Variation des herkömmlichen Systems erfolgt eine induktive Übertragung von Strom durch an beide Seiten der Hochbarrierefolie anliegende Spulen. Dies ist jedoch ebenfalls ressourcenintensiv, da zur Übertragung von größeren Strömen ein großer Spulenaufbau und/oder eine hohe anzulegende Spannung vonnöten ist.

Die WO 2014/121889 A1 offenbart einen Vakuumdämmkörper, der sämtliche Merkmale aus dem Oberbegriff des Anspruchs 1 aufweist Die DE10054419A1 offenbart eine Leitungsdurchführung zum galvanischen Verbinden einer ersten Schaltungsanordnung mit einer von dieser durch eine Trennwand räumlich getrennten zweiten elektrischen Schaltungsanordnung.

Es ist daher die Aufgabe der vorliegenden Erfindung eine kostengünstige Durchführung für eine elektrische Leitung durch eine Hochbarrierefolie zu entwerfen, die die hohen Anforderungen an die Vakuumdichtigkeit erfüllt und mit der eine große Leistung verlustarm über die durchgeführte elektrische Leitung übermittelt werden kann.

Diese Aufgabe wird durch die Vorrichtung zum vakuumdichten Durchführen einer elektrischen Leitung durch eine Hochbarrierefolie gelöst, die die Merkmale nach dem Gegenstand des Anspruchs 1 aufweist.

Hierbei umfasst die Vorrichtung unter anderem ein Hohlrohr mit einem hiervon abstehenden Kragen, eine Hochbarrierefolie mit einem Durchgangsloch, durch das das Hohlrohr verläuft, und ein Verpresselement, das an der Seite der Hochbarrierefolie angeordnet ist, die vom Kragen abgewandt ist, und die Hochbarrierefolie gegen den Kragen drängt, wobei die Hochbarrierefolie zwischen dem Kragen des Hohlrohrs und dem Verpresselement angeordnet ist. Ferner ist die Vorrichtung dadurch gekennzeichnet, dass eine elektrische Leitung in dem Hohlrohr verläuft, die von der einen Seite der Hochbarrierefolie zu der anderen Seite führt, und in dem Hohlrohr eine Dichtmasse zum vakuumdichten Abschließen des Hohlrohrs vorhanden ist.

Vorzugsweise weist das Hohlrohr den vom Hohlrohr abstehenden Kragen an einen seiner beiden Enden auf. Für den Erfolg der Erfindung ist es hierbei von untergeordneter Bedeutung, wie genau der vom Hohlrohr abstehende Kragen geformt ist. Lediglich eine Ausdehnung in der zur Längsrichtung des Hohlrohrs orthogonalen Richtung ist notwendig, um die Erfindung umzusetzen. Daher ist es auch möglich, dass der Kragen die Grundform eines Rohrflansches aufweist.

Eine Hochbarrierefolie stellt die diffusionsdichte Umhüllung eines Vakuumkörpers dar, der aufgrund seiner Vakuumeigenschaft hervorragende Dämmeigenschaften besitzt.

Unter einer vakuumdichten oder diffusionsdichten Umhüllung bzw. unter einer vakuumdichten oder diffusionsdichten Verbindung bzw. unter dem Begriff Hochbarrierefolie wird vorzugsweise eine Umhüllung bzw. eine Verbindung bzw. eine Folie verstanden, mittels derer der Gaseintrag in den Vakuumdämmkörper so stark reduziert ist, dass der durch Gaseintrag bedingte Anstieg in der Wärmeleitfähigkeit des Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise liegt der durch Gaseintrag bedingte Anstieg in der Wärmeleitfähigkeit des Vakuumdämmkörpers über dessen Lebensdauer bei < 100 % und besonders bevorzugt bei < 50 %.

Vorzugsweise ist die flächenspezifische Gasdurchgangsrate der Umhüllung bzw. der Verbindung bzw. der Hochbarrierefolie < 10-5 mbar * l / s *m² und besonders bevorzugt < 10-6 mbar * l / s *m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasdurchgangsraten vorzugweise im Bereich von < 10-2 mbar * l / s * m² und besonders bevorzugt im Bereich von < 10-3 mbar * l / s * m² (gemessen nach ASTM F-1249-90). Vorzugsweise werden durch diese geringen Gasdurchgangsraten die vorgenannten geringen Anstiege der Wärmeleitfähigkeit erreicht.

Ein aus dem Bereich der Vakuumpaneele bekanntes Hüllsystem sind sogenannte Hochbarrierefolien. Darunter werden im Rahmen der vorliegenden Erfindung vorzugsweise Ein- oder Mehrschichtfolien (die vorzugsweise siegelfähig sind) mit einer oder mehreren Barriereschichten (typischerweise metallische Schichten oder Oxid-Schichten, wobei als Metall oder Oxid vorzugsweise Aluminium bzw. ein Aluminiumoxid Verwendung findet) verstanden, die den oben genannten Anforderungen (Anstieg der Wärmeleitfähigkeit und/oder flächenspezifische Gasdurchgangsrate) als Barriere gegen den Gaseintrag genügen.

Bei den oben genannten Werten bzw. bei dem Aufbau der Hochbarrierefolie handelt es sich um exemplarische, bevorzugte Angaben, die die Erfindung nicht beschränken.

Das Verpresselement, das an der den Kragen abgewandten Seite der Hochbarrierefolie angeordnet ist und die Hochbarrierefolie gegen den Kragen drängt, steht vorzugsweise in einer Wirkverbindung mit dem Hohlrohr. So ist denkbar, dass das Verpresselement eine Schraubenmutter ist, und das Hohlrohr mit Hilfe eines Außengewindes den Schraubenvater darstellt.

Das Durchgangsloch der Hochbarrierefolie ist derart angeordnet, dass das Hohlrohr hierdurch hindurch tritt. Ferner klemmt die der Hochbarrierefolie zugewandte Fläche des Kragens im Zusammenspiel mit dem Verpresselement die Hochbarrierefolie zwischen Kragen und Verpresselement fest. Hierbei kann durch eine hochwertige und genaue Verarbeitung von Hohlrohr bzw. Kragen und dem Verpresselement eine vakuumdichte Verbindung in dem Übergangsbereich der Hochbarrierefolie geschaffen werden.

Die durch das Hohlrohr verlaufende elektrische Leitung dient zum Zuführen oder Abführen von elektrischen Ladungen und steht vorzugsweise mit einem an der Innenseite der Hochbarrierefolie angeordneten Verbraucher in Verbindung, der sich innerhalb des vakuumierten Bereichs befindet.

Um ein Eindringen von Luft in den vakuumierten Bereich über das die Hochbarrierefolie durchdringende Hohlrohr zu verhindern, ist das Hohlrohr, in dem die elektrische Leitung verläuft, mit Hilfe einer Dichtmasse vakuumdicht versiegelt.

Nach einem weiteren optionalen, vorteilhaften Merkmal der Vorrichtung weist das Verpresselement ein Durchgangsloch auf, durch das das Hohlrohr verläuft. Vorzugsweise steht das Verpresselement über eine Gewindeverbindung mit dem Hohlrohr in Verbindung. Typischerweise ist diese Gewindeverbindung über ein Innengewinde in dem Durchgangsloch des Verpresselements und einem Außengewinde des Hohlrohrs realisiert. Dann ist es möglich mit Hilfe einer Drehung von Verpresselement bzw. Hohlrohr die dazwischen angeordnete Hochbarrierefolie zwischen Kragen und der dem Kragen zugewandten Seite des Verpresselements zu klemmen.

Vorzugsweise umfasst die Vorrichtung ferner einen Druckverteiler, der zwischen Folie und Verpresselement angeordnet ist, wobei der Druckverteiler ein Durchgangsloch aufweist, durch das das Hohlrohr verläuft. Durch den Druckverteiler wird der vom Verpresselement ausgeübte Druck auf eine größere Fläche verteilt, sodass eine bessere und dichtere Klemmwirkung zwischen Kragen und Hochbarrierefolie erreicht werden kann. Vorzugsweise entspricht die der Hochbarrierefolie zugewandte Fläche des Druckverteilers der Negativfläche des Kragens, die der Hochbarrierefolie zugewandt ist. So ist beispielsweise denkbar, dass die einander zugewandten Seiten des Kragens und des Druckverteilers parallel verlaufende Kontaktflächen aufweisen, zwischen denen die Hochbarrierefolie besonders wirkungsvoll geklemmt werden kann.

Vorzugsweise besteht das Hohlrohr mit den Kragen und/oder das Verpresselement aus Metall. Darüber hinaus ist es ebenfalls von Vorteil, wenn das Hohlrohr einstückig mit dem Kragen ausgeführt ist.

Vorzugsweise erstreckt sich der von dem Hohlrohr abstehende Kragen orthogonal zur Längsrichtung des Hohlrohrs, sodass sich in einer Seitenansicht des Hohlrohrs mit Kragen im Übergang vom Hohlrohr zu der zur Hochbarrierefolie zugewandten Fläche ein rechter Winkel ergibt. Dies ist jedoch keine Notwendigkeit der Erfindung. Vielmehr ist für einen vakuumdichten Abschluss notwendig, dass die Fläche, die von Kragen der Hochbarriere zugewandt ist, und die Fläche, die die Hochbarrierefolie gegen den Kragen presst, einander entsprechen.

Nach der Erfindung weist die Vorrichtung ein Dichtelement auf, das ein Durchgangsloch umfasst, durch das das Hohlrohr verläuft, wobei das Dichtelement zwischen dem Kragen und der Hochbarrierefolie oder zwischen der Hochbarrierefolie und dem Verpresselement angeordnet ist.

Das Dichtelement dient zum Ausgleichen fertigungstechnischer Unebenheiten in den einander entsprechenden Flächen des Kragens und des Druckverteilers bzw. des Verpresselements, mit dem die Hochbarrierefolie an den Kragen gedrückt wird. Vorzugsweise umfasst das Dichtelement Polyethylen oder besteht aus Polyethylen, da hierbei eine Flächendichtung der Flächen von dem Kragen bzw. der die Hochbarrierefolie an den Kragen drückenden Fläche auch bei schlechten Oberflächen gewährleistet werden kann. Es empfiehlt sich die Verwendung eines Dichtrings, der Polyethylen umfasst bzw. der aus Polyethylen besteht.

Bei einer entsprechend großen Presskraft, die auf das Dichtelement wirkt, verschmilzt das Polyethylen umfassende oder das aus Polyethylen bestehende Dichtelement und füllt eventuelle Unebenheiten der Oberflächen aus. In diesem Zusammenhang ist es von besonderem Vorteil, dass das Verpresselement mit dem Hohlrohr in einer Gewindeverbindung steht, da hiermit eine ausreichend große Presskraft erzielt werden kann, die ein Verschmelzen des Dichtelements hervorrufen kann.

Auch ist ein Dichtelement denkbar, das die in Richtung der Folie wirkenden Fläche des Kragens vollständig abdeckt, also so ausgeführt ist, dass der Kragen nur mit dem Dichtelement in Berührung kommt und nicht über das Dichtelement hinausgeht.

Vorzugsweise ist die in dem Hohlrohr eingebrachte Dichtmasse zum vakuumdichten Abschließen des Hohlrohrs ein Epoxidharz. Die Verwendung von Epoxidharz vereinfacht die Herstellung der Vorrichtung, da nach dem Durchführen der elektrischen Leitung durch das Hohlrohr Epoxidharz in die durch das Hohlrohr dargestellte Öffnung gegossen werden kann. Das Epoxidharz verhindert, vorzugsweise nach einem Aushärtevorgang, eine Diffusion von Gasmolekülen durch das mit Epoxidharz verschlossene Hohlrohr.

Dabei kann die durch das Hohlrohr verlaufende elektrische Leitung ein lackierter Draht sein. Durch die Lackschicht auf einem stromführenden Draht wird dieser isoliert und trägt zu einem Vermeiden von Kurzschlüssen bei. Demzufolge ist es auch möglich mehrere elektrische Leitungen durch ein einziges Hohlrohr zu führen, da selbst bei einer Berührung dergleichen ein Kurzschluss aufgrund der Lackschicht, die die Drähte umgibt, nicht auftritt.

In einer Ausführungsform ist die elektrische Leitung an ein thermoelektrisches Element angeschlossen. Alternativ oder zusätzlich ist denkbar, dass an die elektrische Leitung ein Sensor angeschlossen ist, beispielsweise ein Sensor zur Überwachung des Gasdrucks innerhalb des Vakuumdämmkörpers.

Zudem umfasst die Erfindung ein Verfahren zum Erstellen einer vakuumdichten Durchführung einer elektrischen Leitung durch eine Hochbarrierefolie mit einer der vorausgehend beschriebenen Vorrichtungen. Hierbei wird die Vorrichtung an einem ersten Stück einer Hochbarrierefolie angebracht und das erste Stück der Hochbarrierefolie an ein weiteres Stück einer Hochbarrierefolie diffusionsdicht angebracht. Vorzugsweise erfolgt das Anbringen des mit der Vorrichtung versehenen ersten Stücks der Hochbarrierefolie an das weitere Stück der Hochbarrierefolie mittels thermischer Versiegelung.

Des Weiteren wird auch ein Verfahren zur Herstellung eines wärmeisolierten Behältnisses mit einem temperierten Innenraum beschrieben, vorzugsweise eines Kühl- und/oder Gefriergerätes, wobei die Wärmedämmung des Behältnisses ein oder mehrere Vakuumisolationskörper mit einer Umhüllung aus einer vakuumdichten Folie umfasst, wobei vor Fertigstellung des Vakuumisolationskörpers innerhalb der Umhüllung wenigstens ein thermoelektrisches Element angeordnet wird, eine Durchführung durch die Umhüllung erstellt wird und eine elektrische Leitung durch diese Durchführung geführt wird.

Vor Fertigstellung soll in diesem Zusammenhang bedeuten, dass die entsprechenden Schritte vor Evakuierung der Umhüllung und vorzugsweise vor Fertigstellung der Umhüllung durchgeführt werden.

In einer nicht von der Erfindung umfassten Ausführungsform wird die Durchführung unter Verwendung einer erfindungsgemäßen Vorrichtung und/oder im Rahmen eines erfindungsgemäßen Verfahrens hergestellt.

In einer nicht von der Erfindung umfassten Ausführungsform wird das thermoelektrische Element vor oder nach dessen Anordnung innerhalb der Umhüllung mit der elektrischen Leitung verbunden.

In einer nicht von der Erfindung umfassten Ausführungsform wird die elektrische Leitung vor oder nach deren Führung durch die Durchführung mit dem thermoelektrischen Element verbunden.

Das thermoelektrische Element dient vorzugsweise zur Beheizung und/oder Kühlung des temperierten Innenraums. Der temperierte Innenraum ist je nach Art des Gerätes (Kühlgerät, Wärmeschrank etc.) entweder gekühlt oder beheizt.

Das wärmeisolierte Behältnis weist mindestens einen temperierten Innenraum auf, wobei dieser gekühlt oder beheizt sein kann, so dass sich in dem Innenraum eine Temperatur unterhalb oder oberhalb der Umgebungstemperatur von z.B. 21 °C ergibt.

Besonders bevorzugt ist eine nicht von der Erfindung umfasste Ausführung einer Wärmedämmung, bei der zwischen der den Innenraum begrenzenden Innenwand und der Außenhaut des wärmeisolierten Behältnisses eine Wärmedämmung angeordnet ist, die aus einem Vollvakuumsystem besteht. Darunter ist eine Wärmedämmung zu verstehen, die ausschließlich oder überwiegend aus einem evakuierten Bereich besteht, der mit einem Kernmaterial gefüllt ist. Die Begrenzung dieses Bereiches kann beispielsweise durch eine vakuumdichte Folie und vorzugsweise durch eine Hochbarrierefolie gebildet werden. Somit kann zwischen der Innenwand des Behältnisses, vorzugsweise Geräts und der Außenhaut des Behältnisses, vorzugsweise Gerätes, als Wärmedämmung ausschließlich ein solcher Folienkörper vorliegen, der einen durch eine vakuumdichte Folie umgebenen Bereich aufweist, in dem Vakuum herrscht und in dem ein Kernmaterial angeordnet ist. Eine Ausschäumung und/oder Vakuumisolationspaneele als Wärmedämmung oder eine sonstige Wärmedämmung außer dem Vollvakuumsystem zwischen der Innenseite und der Außenseite des Behältnisses bzw. Gerätes sind vorzugsweise nicht vorgesehen.

Diese bevorzugte Art der Wärmedämmung in Form eines Vollvakuumsystems kann sich zwischen der den Innenraum begrenzenden Wand und der Außenhaut des Korpus des Behältnisses und/oder zwischen der Innenseite und der Außenseite eines Verschlusselementes des Behältnisses, wie z.B. einer Tür, Klappe, Deckel oder dergleichen erstrecken.

Das Vollvakuumsystem kann so erhalten werden, dass eine Umhüllung aus einer gasdichten Folie mit einem Kernmaterial gefüllt und anschließend vakuumdicht versiegelt wird. In einer Ausführungsform erfolgt sowohl das Befüllen als auch das vakuumdichte Versiegeln der Umhüllung bei Normal- bzw. Umgebungsdruck. Die Evakuierung erfolgt dann durch Anschluss einer geeigneten in die Umhüllung eingearbeiteten Schnittstelle, beispielsweise eines Evakuierungsstutzens, der ein Ventil aufweisen kann, an eine Vakuumpumpe. Vorzugsweise herrscht während der Evakuierung außerhalb der Umhüllung Normal- bzw. Umgebungsdruck. Es ist in dieser Ausführungsform vorzugsweise zu keinem Zeitpunkt der Herstellung erforderlich, die Umhüllung in eine Vakuumkammer einzubringen. Insofern kann in einer Ausführungsform während der Herstellung der Vakuumdämmung auf eine Vakuumkammer verzichtet werden.

Das Füllen mit Kernmaterial, die vakuumdichte Versiegelung und die Evakuierung erfolgen vorzugsweise nach den Arbeitsschritten der Anordnung des thermoelektrischen Elements, der Herstellung der Umhüllung und der Durchführung und Verbindung der elektrischen Leitung. Das Füllen mit Kernmaterial, die vakuumdichte Versiegelung und die Evakuierung stellen in einer Ausführungsform Arbeitsschritte dar, die der Fertigstellung des Vakuumisolationskörpers zuzurechnen sind.

In einer nicht von der Erfindung umfassten Ausführungsform ist vorgesehen, dass es sich bei dem erfindungsgemäß hergestellten Behältnis um ein Kühl- und/oder Gefriergerät, insbesondere um ein Haushaltsgerät bzw. ein gewerbliches Kühlgerät handelt. Beispielsweise sind solche Geräte umfasst, die für eine stationäre Anordnung im Haushalt, in einem Hotelzimmer, in einer gewerblichen Küche oder in einer Bar konzipiert sind. Beispielsweise kann es sich auch um einen Weinkühlschrank handeln. Ferner sind auch Kühl- und/oder Gefriertruhen von der Erfindung umfasst. Die erfindungsgemäßen Geräte können eine Schnittstelle zur Anbindung an eine Stromversorgung, insbesondere an ein Haushaltsstromnetz (z.B. einen Stecker) und/oder eine Steh- oder Einbauhilfe wie beispielsweise Stellfüße oder Schnittstelle zur Fixierung innerhalb einer Möbelnische aufweisen. Beispielsweise kann es sich bei dem Gerät um ein Einbaugerät oder auch um ein Standgerät handeln.

In einer nicht von der Erfindung umfassten Ausführungsform ist das Behältnis bzw. das Gerät derart ausgebildet, dass es mit einer Wechselspannung, wie beispielsweise mit einer Hausnetzspannung von z.B. 120 V und 60 Hz oder 230 V und 50 Hz betrieben werden kann. In einer alternativen Ausführungsform ist das Behältnis bzw. das Gerät derart ausgebildet, dass es mit Gleichstrom einer Spannung von beispielsweise 5 V, 12 V oder 24 V betrieben werden kann. In dieser Ausgestaltung kann vorgesehen sein, dass innerhalb oder außerhalb des Gerätes ein Steckernetzteil vorgesehen ist, über welches das Gerät betrieben wird. Ein Vorteil der Verwendung von thermoelektrischen Wärmepumpen ist in dieser Ausführungsform, dass die komplette EMV-Problematik lediglich am Netzteil auftritt.

Insbesondere kann vorgesehen sein, dass das Kühl- und/oder Gefriergerät eine schrankartige Gestalt hat und einen Nutzraum aufweist, der an seiner Vorderseite (im Falle einer Truhe an der Oberseite) für einen Benutzer zugänglich ist. Der Nutzraum kann in mehrere Kompartimente unterteilt sein, die alle bei derselben oder bei unterschiedlichen Temperaturen betrieben werden. Alternativ kann lediglich ein Kompartiment vorgesehen sein. Innerhalb des Nutzraumes bzw. eines Kompartiments können auch Lagerungshilfen wie beispielsweise Ablagefächer, Schubladen oder Flaschenhalter (im Falle einer Truhe auch Raumteiler) vorgesehen sein, um eine optimale Lagerung von Kühl- oder Gefriergütern und eine optimale Platzausnützung zu gewährleisten.

Der Nutzraum kann durch wenigstens eine um eine vertikale Achse schwenkbare Türe verschlossen sein. Im Falle einer Truhe ist eine um eine horizontale Achse schwenkbare Klappe oder ein Schiebedeckel als Verschlusselement denkbar. Die Türe oder ein sonstiges Verschlusselement kann im geschlossenen Zustand anhand einer umlaufenden Magnetdichtung mit dem Korpus im Wesentlichen luftdicht in Verbindung stehen. Vorzugsweise ist auch die Türe bzw. ein sonstiges Verschlusselement wärmeisoliert, wobei die Wärmeisolierung anhand einer Ausschäumung und ggf. anhand von Vakuumisolationspaneelen erreicht werden kann, oder auch vorzugsweise anhand eines Vakuumsystems und besonders bevorzugt anhand eines Vollvakuumsystems. An der Innenseite der Türe können ggf. Türabsteller vorgesehen sein, um auch dort Kühlgüter lagern zu können.

In einer nicht von der Erfindung umfassten Ausführungsform kann es sich um ein Kleingerät handeln. In derartigen Geräten weist der Nutzraum, der durch die Innenwand des Behälters definiert ist, beispielsweise ein Volumen von kleiner 0,5 m³, kleiner 0,4 m³ oder kleiner 0,3 m³ auf.

Die Außenabmessungen des Behälters bzw. Gerätes liegen vorzugsweise im Bereich bis 1 m hinsichtlich der Höhe, der Breite und der Tiefe.

Die oben beschriebene Idee ist aber nicht auf Kühl- und/oder Gefriergeräte beschränkt sondern betrifft allgemein Geräte mit einem temperierten Innenraum, beispielsweise auch Wärmeschränke oder Wärmetruhen.

Das Anbringen der erfindungsgemäßen Vorrichtung an der Hochbarrierefolie, sodass eine diffusionsdichte elektrische Durchführung geschaffen ist, ist mit einer Mehrzahl von Prozessschritten verbunden, die sich typischerweise schwer in den Herstellprozess einer Vakuumdämmung integrieren lassen. Es ist daher von Vorteil die Vorrichtung an einem kleinen Stück einer Hochbarrierefolie anzubringen, und dieses kleine Stück der Hochbarrierefolie, das mit der Vorrichtung in Verbindung steht, in einem nachfolgenden Verfahrensschritt mit einem weiteren Stück einer Hüllfolie zu verbinden. Die beiden miteinander verbundenen Stücke der Hochbarrierefolie begrenzen dann zusammen den zu vakuumierenden Bereich, stellen also die Außenhaut des Vakuumkörpers dar. Selbstverständlich ist der Verbindungsbereich der beiden Hochbarrierefolienstücke diffusionsdicht auszuführen.

Weitere Einzelheiten und Vorteile werden anhand einer in der Figur dargestellten Ausführungsform der vorliegenden Erfindung beschrieben. Es zeigt:

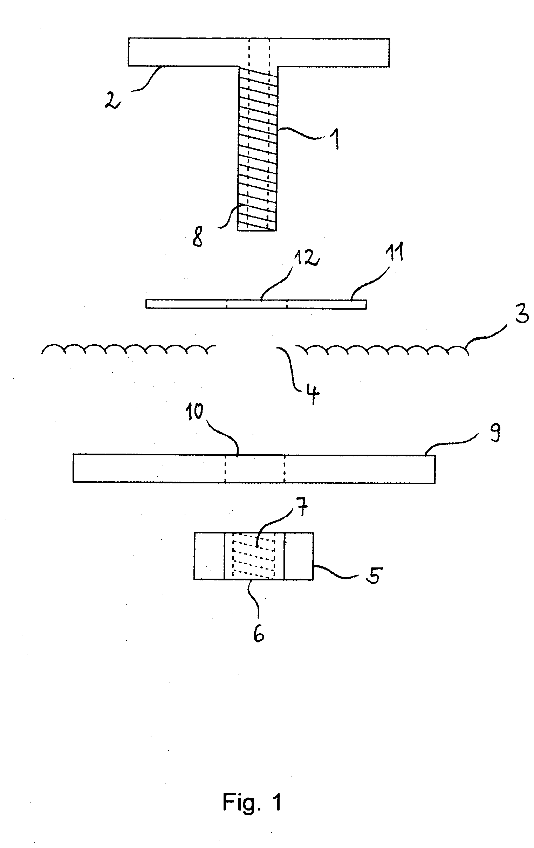

- Fig. 1:: eine Explosionsdarstellung einiger Teile der erfindungsgemäßen Vorrichtung zum vakuumdichten Durchführen einer elektrischen Leitung durch eine Hochbarrierefolie.

Fig. 1 zeigt das Hohlrohr 1, an dem ein Kragen 2, der im Wesentlichen einem Flansch entspricht, an einem seiner beiden Enden angeordnet ist. Zudem erkennt man, dass das Hohlrohr 1 an seiner Außenseite mit einem Gewinde 8 versehen ist. Das Gewinde 8 erstreckt sich ausgehend vom Kragen 2 bis zu dem dem Kragen 2 gegenüberliegenden Ende des Hohlrohrs 1.

Ferner erkennt man ein Dichtelement 11, das ein Loch 12 aufweist, durch welches das Hohlrohr 1 durchgeführt wird, sodass das Dichtelement 11 an dem Kragen 2 des Hohlrohrs 1 anliegt. Bei Ausüben einer genügend großen Presskraft verschmilzt das vorzugsweise Polyethylen umfassende oder vorzugsweise aus Polyethylen bestehende Dichtelement 11, und gleicht somit Unebenheiten zwischen dem Kragen 2 und dem anpressenden Element, das die Hochbarrierefolie 3 von der anderen Seite gegen den Kragen 2 drückt, aus.

Darüber hinaus wird das Hohlrohr mit dem den Kragen 2 gegenüberliegenden Ende durch ein Loch 4 der Hochbarrierefolie 3 geführt, sodass ein weiteres auf das Hohlrohr 1 aufgestecktes Element, nämlich der Druckverteiler 9 mit seinem Durchgangsloch 10 auf das Hohlrohr aufgefädelt werden kann.

Abschließend erfolgt das Aufsetzen bzw. das Aufdrehen des Verpresselements 5, das ein zu dem Außendurchmesser des Hohlrohrs 1 entsprechendes Loch 6 aufweist. Das Loch 6 weist ein mit dem Außengewinde 8 des Hohlrohrs 1 in Eingriff bringbares Innengewinde 7 auf. Mit Hilfe der Gewindeverbindung zwischen Verpresselement und Hohlrohr werden das Dichtelement 11, die Hochbarrierefolie 3 und der Druckverteiler 9 in Richtung des vom Hohlrohr 1 abstehenden Kragens 2 gedrängt, sodass entlang dieser Klemmverbindung eine Diffusionsdichtheit hergestellt wird.

Im vorliegenden Beispiel ist das Verpresselement 5 eine Schraubenmutter, deren Schraubenvater das Hohlrohr 1 mit dem entsprechenden Gewinde 8 ist. Das Verpresselement 5 ist so ausgelegt, dass genügend Druck auf die Klemmverbindung gebracht werden kann, sodass das Dichtelement 11 verschmilzt und etwaige Unebenheiten zwischen Kragen 2, Hochbarrierefolie 3 und Druckverteiler 9 ausgleicht.

Zur Erfindung gehört weiter die durch das Hohlrohr 1 von der einen Seite der Hochbarrierefolie 3 zu deren anderen Seite verlaufende elektrische Leitung sowie die das Hohlrohr 1 abdichtende Dichtmasse, die nach dem Durchführen der elektrischen Leitung in das Hohlrohr 1 eingebracht wird. Beide Elemente sind nicht in der Fig. 1 dargestellt. Die Dichtmasse ist vorzugsweise ein das Hohlrohr 1 vakuumdicht bzw. diffusionsdicht verschließendes Epoxidharz, das in die Öffnung des Hohlrohrs 1 eingegossen werden kann.

Die elektrische Leitung, die durch das Hohlrohr 1 verläuft, ist ein Draht, der dazu ausgebildet ist Strom zu leiten. Vorzugsweise ist dieser Draht lackiert, um einen Kurzschluss entgegenzuwirken. Typischerweise verbindet der Draht einen elektrischen Verbraucher mit seiner Quelle/Senke.

Dem Fachmann ist klar, dass nicht nur genau eine elektrische Leitung durch das Hohlrohr 1 geführt werden kann, sondern dass mehrere elektrische Leitungen durch die Vorrichtung verlaufen können.

## Patentansprüche

1. Vorrichtung zum vakuumdichten Durchführen einer elektrischen Leitung durch eine Hochbarrierefolie, umfassend:
ein Hohlrohr (1) mit einem hiervon abstehenden Kragen (2),
eine Hochbarrierefolie (3) mit einem Durchgangsloch (4), durch das das Hohlrohr (1) verläuft, und
ein Verpresselement (5), das an der dem Kragen (2) abgewandten Seite der Hochbarrierefolie (3) angeordnet ist und die Hochbarrierefolie (3) gegen den Kragen (2) drängt, wobei
die Hochbarrierefolie (3) zwischen dem Kragen (2) des Hohlrohrs (1) und dem Verpresselement (5) angeordnet ist,
eine elektrische Leitung in dem Hohlrohr (1) verläuft, die von der einen Seite der Hochbarrierefolie (3) zu deren anderen Seite führt,
**dadurch gekennzeichnet, dass**
in dem Hohlrohr (1) eine Dichtmasse zum vakuumdichten Abschließen des Hohlrohrs (1) vorhanden ist, und
die Vorrichtung ferner mit einem Dichtelement (11) versehen ist, das ein Durchgangsloch (12) aufweist, durch das das Hohlrohr (1) verläuft, wobei
das Dichtelement (11) zwischen dem Kragen (2) und der Hochbarrierefolie (3) oder zwischen der Hochbarrierefolie (3) und dem Verpresselement (5) angeordnet ist, und
dass die Vorrichtung dazu ausgebildet ist, dass bei Ausüben einer Presskraft durch das Verpresselement (5) das Dichtelement (11) schmilzt und
Unebenheiten zwischen dem Kragen (2) und dem anpressenden Element, das die Hochbarrierefolie (3) von der anderen Seite gegen den Kragen (2) drückt, ausgleicht.

2. Vorrichtung nach Anspruch 1, wobei das Verpresselement (5) ein Durchgangsloch (4) aufweist, durch das das Hohlrohr (1) verläuft, und vorzugsweise über eine Gewindeverbindung mit dem Hohlrohr (1) in Verbindung steht.

3. Vorrichtung nach einem der vorhergehenden Ansprüche, ferner umfassend einen Druckverteiler (9), vorzugsweise in Form einer Platte, der zwischen Folie und Verpresselement (5) angeordnet ist, wobei der Druckverteiler (9) ein Durchgangsloch (10) aufweist, durch das das Hohlrohr (1) verläuft.

4. Vorrichtung nach einem der vorhergehenden Ansprüche, wobei das Hohlrohr (1) mit Kragen (2) und/oder das Verpresselement (5) aus Metall besteht.

5. Vorrichtung nach einem der vorhergehenden Ansprüche, wobei der von dem Hohlrohr (1) abstehende Kragen (2) sich orthogonal zur Längsrichtung des Hohlrohrs (1) erstreckt und vorzugsweise eine der Hochbarrierefolie (3) zugewandte Fläche aufweist, die orthogonal zur Längsrichtung des Hohlrohrs (1) verläuft.

6. Vorrichtung nach Anspruch 1, wobei das Dichtelement (11) Polyethylen umfasst oder aus Polyethylen besteht und vorzugsweise ein Dichtring ist.

7. Vorrichtung nach einem der vorhergehenden Ansprüche, wobei die im Hohlrohr (1) vorhandene Dichtmasse ein Epoxidharz ist.

8. Vorrichtung nach einem der vorhergehenden Ansprüche, wobei die durch das Hohlrohr (1) verlaufende elektrische Leitung ein lackierter Draht ist.

9. Vorrichtung nach einem der vorhergehenden Ansprüche, wobei die elektrische Leitung an ein thermoelektrisches Element angeschlossen ist.

10. Verfahren zum Erstellen einer vakuumdichten Durchführung einer elektrischen Leitung durch eine Hochbarrierefolie (3) mit einer Vorrichtung nach einem der vorhergehenden Ansprüche, wobei die Vorrichtung an einem ersten Stück einer Hochbarrierefolie (3) angebracht wird.

11. Verfahren nach Anspruch 10, wobei ferner das erste Stück der Hochbarrierefolie (3) an ein weiteres Stück einer Hochbarrerefolie diffusionsdicht angebracht wird, vorzugsweise mittels thermischer Versiegelung.

## Claims

1. An apparatus for the vacuum-tight leading of an electric line through a high barrier film, comprising:
a hollow pipe (1) having a collar (2) projecting therefrom;
a high barrier film (3) having a passage hole (4) through which the hollow pipe (1) runs; and
a pressing element (5) that is arranged at the side of the high barrier film (3) that is remote from the collar (2) and that urges the high barrier film (3) toward the collar (2), wherein
the high barrier film (3) is arranged between the collar (2) of the hollow pipe (1) and the pressing element (5) and
an electric line runs in the hollow pipe (1) that leads from the one side of the high barrier film (3) to its other side;
**characterized in that**
a sealing compound is present in the hollow pipe (1) for the vacuum-tight closing of the hollow pipe (1); and
**in that** the apparatus is furthermore provided with a sealing element (11) that has a passage hole (12) through which the hollow pipe (1) runs; with the sealing element (11) being arranged between the collar (2) and the high barrier film (3) or between the high barrier film (3) and the pressing element (5); and
**in that** the apparatus is configured such that
the sealing element (11) melts on exertion of a pressing force by the pressing element (5); and
compensates irregularities between the collar (2) and the pressing element that presses the high barrier film (3) toward the collar (2) from the other side.

2. An apparatus in accordance with claim 1, wherein the pressing element (5) has a passage hole (4) through which the hollow pipe (1) runs and is preferably connected to the hollow pipe (1) via a threaded connection.

3. An apparatus in accordance with one of the preceding claims, further comprising a pressure distributor (9), preferably in the form of a plate, that is arranged between the film and the pressing element (5), with the pressure distributor (9) having a passage hole (10) through which the hollow pipe (1) runs.

4. An apparatus in accordance with one of the preceding claims, wherein the hollow pipe (1) with collar (2) and/or the pressing element (5) consists/consist of metal.

5. An apparatus in accordance with one of the preceding claims, wherein the collar (2) projecting from the hollow pipe (1) extends orthogonally to the longitudinal direction of the hollow pipe (1) and preferably has a surface facing the high barrier film (3) and extending orthogonally to the longitudinal direction of the hollow pipe (1).

6. An apparatus in accordance with claim 1, wherein the sealing element (11) comprises polyethylene or consists of polyethylene and is preferably a sealing ring.

7. An apparatus in accordance with one of the preceding claims, wherein the sealing compound present in the hollow pipe (1) is an epoxy resin.

8. An apparatus in accordance with one of the preceding claims, wherein the electric line running through the hollow pipe (1) is a lacquered wire.

9. An apparatus in accordance with one of the preceding claims, wherein the electric line is connected to an thermoelectric element.

10. A method of preparing a vacuum-tight leadthrough of an electric line through a high barrier film (3) using an apparatus in accordance with one of the preceding claims, wherein the apparatus is attached to a first piece of a high barrier film (3).

11. A method in accordance with claim 10, wherein the first piece of the high barrier film (3) is furthermore attached, preferably by means of thermal sealing, to a further piece of a high barrier film in a diffusion-tight manner.

## Revendications

1. Dispositif destiné à faire passer, avec étanchéité au vide, une ligne électrique à travers un film haute barrière, comprenant :
un tube creux (1) doté d'un collet (2) dépassant de celui-ci,
un film haute barrière (3) doté d'un trou de passage (4), par lequel passe le tube creux (1), et
un élément de compression (5), qui est disposé du côté du film haute barrière (3) orienté dans la direction opposée au collet (2) et qui pousse le film haute barrière (3) contre le collet (2),
le film haute barrière (3) étant disposé entre le collet (2) du tube creux (1) et
l'élément de compression (5),
une ligne électrique, qui conduit d'un côté du film haute barrière (3) à son autre côté, s'étendant dans le tube creux (1),
**caractérisé en ce que**
dans le tube creux (1) se trouve une masse d'étanchéité pour la fermeture étanche au vide du tube creux (1), et
le dispositif est en outre pourvu d'un élément d'étanchéité (11), qui comporte un trou de passage (12), par lequel passe le tube creux (1),
l'élément d'étanchéité (11) étant disposé entre le collet (2) et le film haute barrière (3) ou entre le film haute barrière (3) et l'élément de compression (5), et
**en ce que** le dispositif est conçu de telle sorte que, lorsqu'une force de pression est exercée par l'élément de compression (5), l'élément d'étanchéité (11) fond et compense des irrégularités entre le collet (2) et l'élément exerçant une pression, qui pousse le film haute barrière (3) contre le collet (2) depuis l'autre côté.

2. Dispositif selon la revendication 1, dans lequel l'élément de compression (5) comporte un trou de passage (4), par lequel passe le tube creux (1), et est de préférence raccordé au tube creux (1) par le biais d'un assemblage par filetage.

3. Dispositif selon l'une des revendications précédentes, comprenant en outre un répartiteur de pression (9), de préférence sous la forme d'une plaque, qui est disposée entre le film et l'élément de compression (5), le répartiteur de pression (9) comportant un trou de passage (10), par lequel passe le tube creux (1).

4. Dispositif selon l'une des revendications précédentes, dans lequel le tube creux (1) avec le collet (2) et/ou l'élément de compression (5) sont constitués de métal.

5. Dispositif selon l'une des revendications précédentes, dans lequel le collet (2) dépassant du tube creux (1) s'étend perpendiculairement à la direction longitudinale du tube creux (1) et comporte de préférence une surface orientée vers le film haute barrière (3), laquelle s'étend perpendiculairement à la direction longitudinale du tube creux (1).

6. Dispositif selon la revendication 1, dans lequel l'élément d'étanchéité (11) comprend du polyéthylène ou est constitué de polyéthylène et est de préférence une bague d'étanchéité.

7. Dispositif selon l'une des revendications précédentes, dans lequel la masse d'étanchéité présente dans le tube creux (1) est une résine époxyde.

8. Dispositif selon l'une des revendications précédentes, dans lequel la ligne électrique s'étendant à travers le tube creux (1) est un fil émaillé.

9. Dispositif selon l'une des revendications précédentes, dans lequel la ligne électrique est raccordée à un élément thermoélectrique.

10. Procédé de fabrication d'une traversée avec étanchéité au vide d'une ligne électrique à travers un film haute barrière (3), comprenant un dispositif selon l'une des revendications précédentes, dans lequel le dispositif est appliqué sur un premier morceau d'un film haute barrière (3).

11. Procédé selon la revendication 10, dans lequel le premier morceau du film haute barrière (3) est en outre appliqué, avec étanchéité de diffusion, sur un autre morceau d'un film haute barrière, de préférence par scellage thermique.
